# FASCICULE DE BREVET EUROPEEN

(11) **EP 3 607 190 B1**
(45) Date de publication et mention de la délivrance du brevet: **17.02.2021**
(21) Numéro de dépôt: 18722116.3
(22) Date de dépôt: 30.03.2018
(51) Int. Cl.: F02C 9/42

(54) **PROCÉDÉ DE VÉRIFICATION DE LA PUISSANCE MAXIMALE DISPONIBLE D'UNE TURBOMACHINE D'UN AÉRONEF ÉQUIPÉ DE DEUX TURBOMACHINES**
VERFAHREN ZUR ÜBERPRÜFUNG DER MAXIMALEN VERFÜGBAREN LEISTUNG EINES TURBINENTRIEBWERKS EINES FLUGZEUGS MIT ZWEI TURBINENTRIEBWERKEN
METHOD FOR CHECKING THE MAXIMUM AVAILABLE POWER OF A TURBINE ENGINE OF AN AIRCRAFT EQUIPPED WITH TWO TURBINE ENGINES

(30) Priorité: 03.04.2017 FR 1752849
(43) Date de publication de la demande: 12.02.2020
(73) Titulaire: Safran Helicopter Engines, 64510 Bordes (FR)
(72) Inventeur: DARFEUIL, Pierre, 77550 Moissy-Cramayel (FR); MARCONI, Patrick, 77550 Moissy-Cramayel (FR); SEVE, Caroline, 77550 Moissy-Cramayel (FR)
(74) Mandataire: Regimbeau
(86) Numéro de dépôt international: PCT/FR2018/050802
(87) Numéro de publication internationale: WO 2018/185409

(56) Documents cités:
- EP-A1- 2 624 239
- WO-A1-2015/145041
- WO-A2-2012/059671

## Description

### DOMAINE TECHNIQUE

La présente invention concerne un procédé de vérification de la puissance maximale disponible d'une turbomachine d'un aéronef, notamment d'un hélicoptère, comprenant deux turbomachines fonctionnant en parallèle.

### ETAT DE L'ART

D'une manière connue, un hélicoptère est équipé de deux turbomachines fonctionnant en parallèle, chacune étant conçue de manière surdimensionnée pour pouvoir maintenir l'hélicoptère en vol en cas de panne de l'autre turbomachine. Dans ces régimes de fonctionnement dédiés à la gestion d'une turbomachine inopérante, appelés régime OEI (acronyme en terminologie anglo-saxonne de « One Engine Inoperative »), la turbomachine valide fournit une puissance bien au-delà de sa puissance nominale pour permettre à l'hélicoptère de poursuivre son vol et de se poser dans des conditions sûres.

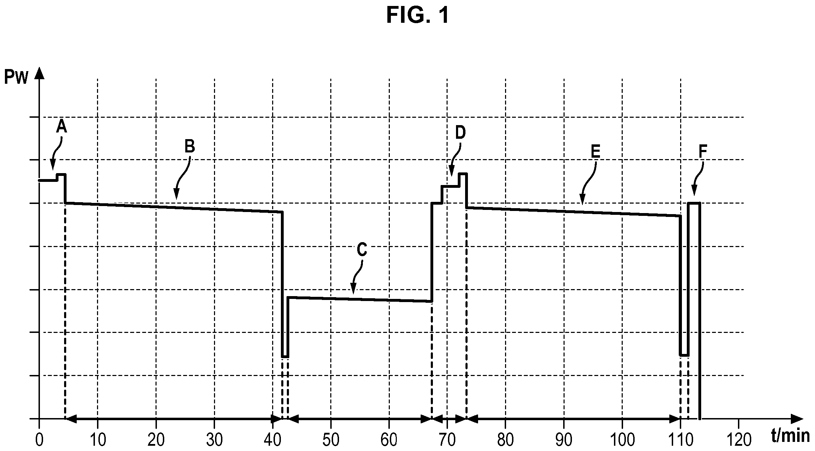

A titre d'exemple, le diagramme illustré en figure 1 représente la variation de puissance totale requise Pw en fonction du temps « t » pour mener à bien une mission de récupération de naufragés à l'aide d'un hélicoptère comprenant deux turbomachines. Cette mission comprend six phases principales :
- une phase de décollage « A » qui peut aller jusqu'à utiliser la puissance PMD dite maximale au décollage ;
- une phase de vol de croisière « B » jusqu'à la zone de recherche effectuée à une puissance inférieure à la puissance PMD ;
- une phase de recherche « C » dans la zone de recherche à basse altitude au-dessus de l'eau qui s'effectue à une puissance faible, inférieure à la puissance PMD et à la puissance de la phase B, de sorte à maximiser le temps d'exploration ;
- une phase de récupération des naufragés « D » en vol stationnaire qui peut nécessiter une puissance de l'ordre de celle déployée au décollage ;
- une phase de retour à la base « E » comparable au vol de croisière B en termes de puissance ; et
- une phase d'atterrissage « F » qui peut aller jusqu'à utiliser la puissance PMD dite maximale au décollage.

Par « PMD » on comprendra ici la Puissance Maximale au Décollage, c'est-à-dire la puissance maximale pouvant être utilisée lors des phases de décollage ou d'atterrissage pendant 5 minutes maximum.

Le diagramme de la figure 1 illustre en particulier que les phases de décollage A, de vol stationnaire D et d'atterrissage F nécessitent que les turbomachines délivrent une puissance importante par rapport aux autres phases de vol.

On comprendra donc qu'en cas de panne d'une des turbomachines, il est primordial de s'assurer que l'autre des turbomachines puisse fournir une puissance suffisante pour assurer les phases de décollage A, de vol stationnaire D ou d'atterrissage F, afin d'éviter que l'hélicoptère par manque de puissance n'amorce une descente en milieu hostile. Cette puissance suffisante correspond à la puissance des régimes OEI.

Or, il est n'est pas possible de tester un aéronef en régime OEI dans la mesure où, à un tel régime, la turbomachine valide fournit un niveau de puissance bien supérieur à la PMD, et s'en trouve par conséquent endommagée de sorte que la turbomachine ne peut plus être utilisée sans une action de maintenance lourde.

Par ailleurs, la disponibilité de la puissance PMD n'est pas vérifiée à chaque décollage. En effet, il arrive fréquemment que les conditions de décollage (masse, conditions ambiantes, aire d'évolution, classe de performance) ne nécessitent pas que les turbomachines fournissent la puissance PMD, le pilote cherchant généralement à minimiser la charge des turbomachines dans un souci d'économie.

Il a donc été nécessaire de développer des stratégies pour s'assurer de la disponibilité de la puissance maximale en régime OEI pour chacune des turbomachines.

Lorsque cela est possible sans entraîner un endommagement des turbomachines, une première stratégie consiste à effectuer, au cours d'un vol technique, par exemple toutes les 500 heures de vol, un contrôle de la vitesse de rotation maximale de chacune des turbomachines. Ce contrôle de la vitesse de rotation maximale des turbomachines est ensuite complété par un contrôle EPC dit de disponibilité de puissance (acronyme en terminologie anglo-saxonne de « Engine Power Check ») réalisé au cours d'un vol commercial, par exemple quotidiennement. Au cours de ce contrôle EPC, on effectue à une puissance donnée une série de mesures de températures et de vitesses de rotation pour chacune des turbomachines de manière à déterminer si, d'un point de vue thermodynamique, chacune des turbomachines aurait la capacité de fournir la puissance maximale à chaque régime, notamment au décollage ou au régime OEI.

Lorsqu'il n'est pas possible de conduire la première stratégie sans risquer d'endommager les turbomachines, une deuxième stratégie consiste à effectuer un contrôle EPC au cours d'un vol commercial, par exemple toutes les 25 heures de vol, et de le compléter par des opérations de maintenance spécifiques visant à détecter d'éventuelles pannes dormantes de certains composants du moteur de l'hélicoptère.

Ces deux stratégies ne sont cependant pas satisfaisantes.

En effet, le contrôle de la vitesse de rotation maximale de chacune des turbomachines nécessite d'être réalisé dans des zones de test dédiées. Or, ces zones de test peuvent être difficilement accessibles par l'opérateur dans sa zone géographique de contrôle aérien.

Par ailleurs, le contrôle EPC est réalisé à un niveau de puissance significativement inférieur à la puissance PMD ce qui accroit l'incertitude quant à la capacité des turbomachines à délivrer la puissance maximale de chaque régime, notamment au décollage et au régime OEI.

Enfin, les opérations de maintenance sont particulièrement délicates et compliquées à mettre en œuvre, nécessitant notamment un outillage spécifique et un personnel qualifié sans lesquels les risques d'erreur de maintenance sont élevés

Le document WO2012/059671 A2 divulgue un procédé d'optimisation de la consommation spécifique d'un hélicoptère équipé de deux turbomoteurs selon l'art antérieur.

### PRESENTATION DE L'INVENTION

La présente invention a pour but de pallier aux problèmes décrits ci-dessus en proposant un procédé de vérification de la disponibilité de la puissance maximale dans le cas où l'une des turbomachines d'un aéronef équipé de deux turbomachines fonctionnant en parallèle est inopérante (régime OEI), dans lequel la puissance des deux turbomachines est désalignée en vol, l'une des turbomachines étant alors commandée pour fonctionner au régime de puissance maximale au décollage.

Plus précisément, l'invention a pour objet un procédé de vérification de la disponibilité de la puissance maximale en régime OEI d'une turbomachine d'un aéronef équipé de deux turbomachines configurées pour fonctionner en parallèle et fournir ensemble une puissance nécessaire à l'aéronef pendant une phase de vol, ledit procédé comprenant les étapes suivantes :
- mettre une première des turbomachines à un régime sensiblement égal à un régime de puissance maximale au décollage, et
- ajuster une puissance fournie par une deuxième des turbomachines, de sorte que les turbomachines continuent à fournir la puissance nécessaire à l'aéronef pendant la phase de vol,
- déterminer une puissance fournie par la turbomachine mise au régime de puissance maximale au décollage, et
- traiter la puissance fournie ainsi déterminée pour en déduire une information relative à la puissance maximale disponible.

Un tel procédé présente l'avantage d'utiliser le régime de puissance maximale au décollage (PMD) pour vérifier que la turbomachine peut délivrer la puissance maximale à chaque régime, notamment aux régimes correspondant à des puissances particulièrement élevées comme le régime OEI. En effet, à ce régime, la turbomachine ne risque pas d'être endommagée, et le niveau de puissance atteint est assez élevé pour limiter les incertitudes quant à la capacité de la turbomachine à atteindre des puissances très élevées.

Préférentiellement, le procédé comprend en outre une étape de détermination d'une puissance seuil, ladite puissance seuil correspondant à une puissance minimale à atteindre par la turbomachine mise au régime de puissance maximale au décollage (PMD) en cas de panne de l'autre turbomachine, et une étape de comparaison de la puissance fournie ainsi déterminée à la puissance seuil.

La puissance seuil (Pₛ) est par exemple égale à la valeur minimale de puissance déclarée par le constructeur dans les tables de performances servant à l'équipage pour déterminer les masses embarquables.

Avantageusement, le procédé comprend également les étapes suivantes :
- mesurer une température typique de la turbomachine, par exemple la température des gaz entre la turbine haute pression et la turbine basse pression, ladite turbomachine étant mise au régime de puissance maximale au décollage (PMD), et
- comparer la température ainsi mesurée à une température seuil prédéterminée, de manière à s'assurer que la température mesurée est inférieure à la température seuil ; et/ou
- mesurer une vitesse de rotation de la turbomachine mise au régime de puissance maximale au décollage, et
- comparer la vitesse de rotation ainsi mesurée à une vitesse de rotation seuil prédéterminé, de manière à s'assurer que la vitesse de rotation mesurée est supérieure ou égale à la vitesse de rotation seuil.

La température seuil (Tₛ) est par exemple égale à la valeur minimale de température entre la turbine haute pression du générateur de gaz et la turbine basse pression déclarée par le constructeur dans les tables de performances servant à l'équipage pour déterminer les masses embarquables. La vitesse de rotation seuil (NGₛ) est par exemple égale à la valeur minimale de vitesse de rotation nominale NG des pièces tournantes du générateur de gaz déclarée par le constructeur dans les tables de performances servant à l'équipage pour déterminer les masses embarquables.

Dans une variante de réalisation, le procédé comprend également une étape de détermination d'une puissance de fonctionnement, ladite puissance de fonctionnement correspondant à une puissance minimale garantissant une ré-accélération de la deuxième des turbomachines en cas de panne de la turbomachine mise au régime de puissance maximale au décollage (PMD), et une étape d'ajustement de la puissance de la turbomachines mise au régime de puissance maximale au décollage (PMD) de sorte que la puissance fournie par la deuxième des turbomachines reste supérieure à la puissance de fonctionnement ainsi déterminée.

Par ailleurs, le procédé peut être automatiquement interrompu lorsque l'une au moins des conditions suivantes est remplie :
- la vitesse de rotation de l'arbre haute pression est inférieure à une première vitesse de rotation seuil,
- la vitesse de rotation de l'arbre basse pression est inférieure à une deuxième vitesse de rotation seuil et supérieure à une troisième vitesse de rotation seuil
- une panne est détectée sur l'une des turbomachines.

L'invention a également pour objet un produit programme d'ordinateur comprenant des instructions de code pour l'exécution d'un procédé de vérification de la puissance maximale disponible d'une turbomachine d'un aéronef tel que précédemment décrit lorsque ce programme est exécuté par un processeur.

L'invention a également pour objet un dispositif de contrôle comprenant un calculateur configuré pour mettre en œuvre un procédé de vérification de la puissance maximale disponible d'une turbomachine d'un aéronef équipé de deux turbomachines destinées à fonctionner en parallèle et à fournir ensemble une puissance nécessaire à l'aéronef pendant une phase de vol tel que précédemment décrit, ledit calculateur étant configuré pour mettre en œuvre les étapes suivantes consistant à :
- mettre une première des turbomachines à un régime sensiblement égal à un régime de puissance maximale au décollage, et
- ajuster une puissance fournie par une deuxième des turbomachines, de sorte que les turbomachines continuent à fournir la puissance nécessaire à l'aéronef pendant la phase de vol,
- déterminer une puissance fournie par la turbomachine mise au régime de puissance maximale au décollage, et
- traiter la puissance fournie ainsi déterminée pour en déduire une information relative à la puissance maximale disponible.

L'invention a également pour objet un ensemble comprenant deux turbomachines configurées pour fonctionner en parallèle et fournir ensemble une puissance nécessaire à un aéronef pendant une phase de vol, ledit ensemble étant caractérisé en ce qu'il comprend un dispositif de contrôle tel que précédemment décrit.

L'invention a également pour objet un aéronef comprenant deux turbomachines configurées pour fonctionner en parallèle et fournir ensemble une puissance nécessaire à l'aéronef pendant une phase de vol, ledit aéronef comprenant un calculateur configuré pour mettre en œuvre un procédé de vérification de la puissance maximale disponible d'une turbomachine d'aéronef tel que précédemment décrit.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 (déjà décrite) est un diagramme illustrant la variation de puissance totale requise en fonction du temps pour mener à bien une mission de récupération de naufragés à l'aide d'un hélicoptère comprenant deux turbomachines ;
- la figure 2 est une représentation schématique d'un hélicoptère selon un mode de réalisation de l'invention ;
- la figure 3 est une représentation schématique d'un dispositif de contrôle de l'hélicoptère illustré à la figure 2 ;
- la figure 4 illustre un procédé de vérification de la puissance maximale disponible d'une turbomachine d'un aéronef selon un mode de réalisation de l'invention.

### DESCRIPTION DETAILLEE

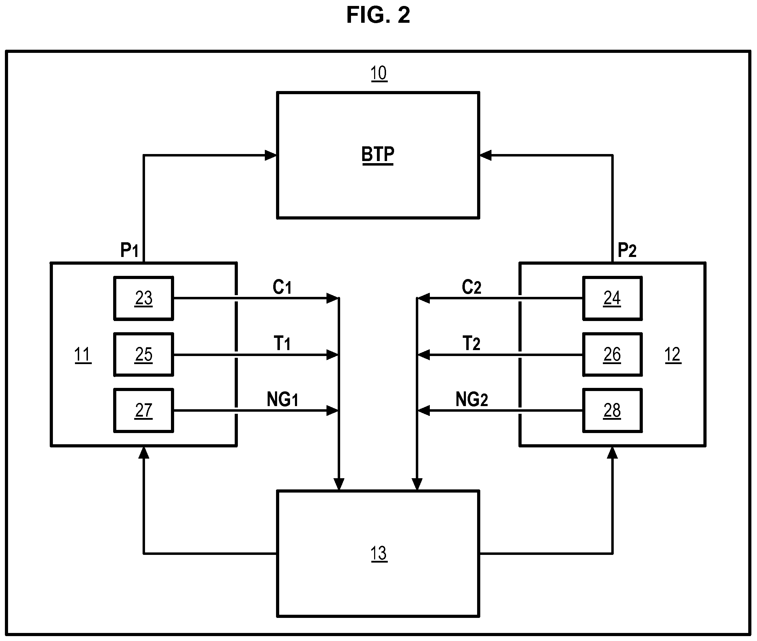

La figure 2 montre un aéronef 10, notamment un hélicoptère, comprenant des moyens de mise en œuvre d'un procédé 100 de vérification de la puissance maximale disponible d'une turbomachine de l'aéronef 10 selon un mode de réalisation de l'invention.

L'hélicoptère 10 est équipé d'une première turbomachine 11 et d'une deuxième turbomachine 12 configurées pour fonctionner en parallèle et fournir ensemble une puissance P₁₊₂ nécessaire à la phase de vol de l'hélicoptère 10. Plus précisément, les première et deuxième turbomachines délivrent respectivement une puissance P₁ et P₂ à une boîte de transmission principale BTP pour que cette dernière transmette la puissance P₁₊₂ à un rotor principal (non représenté) de l'hélicoptère 10.

Chacune des turbomachine 11, 12 comprend d'amont en aval, dans le sens d'écoulement des gaz, une soufflante, un compresseur basse pression, un compresseur haute pression, une chambre de combustion, une turbine haute pression, une turbine basse pression et une tuyère d'échappement des gaz.

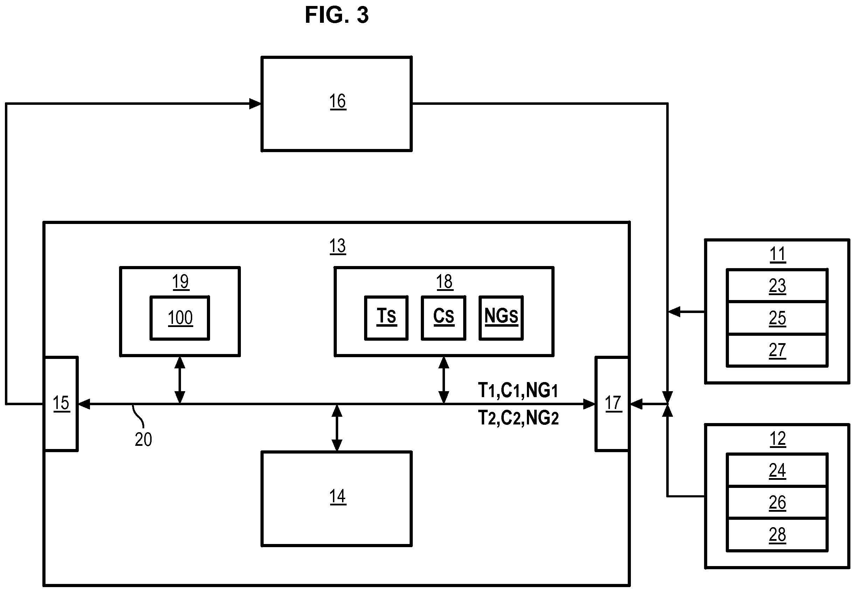

L'hélicoptère 10 est en outre équipé d'un dispositif de contrôle 13 dont la figure 3 est une représentation schématique.

Le dispositif de contrôle 13 comprend un calculateur 14 configuré pour envoyer des instructions de commande à la première turbomachine 11 et à la deuxième turbomachine 12 par l'intermédiaire d'une interface de sortie 15. Plus précisément, le calculateur 14 est configuré pour mettre en œuvre les étapes suivantes consistant à :
- mettre l'une des turbomachines 11, 12 à un régime sensiblement égal à un régime de puissance PMD (étape 101), et
- ajuster la puissance fournie P₂, P₁ par l'autre des turbomachines 12, 11 (étape 102), de sorte que les turbomachines 11, 12 délivrent la puissance P₁₊₂ nécessaire à l'hélicoptère 10 pendant sa phase de vol,
- déterminer la puissance fournie P₁, P₂ par la turbomachine 11, 12 mise au régime de puissance maximale au décollage (PMD) (étape 103), et
- traiter la puissance fournie P₁, P₂ ainsi déterminée pour en déduire une information relative à la puissance maximale disponible (étapes 105, 106).

La puissance P₁₊₂ est par exemple renseignée au dispositif de contrôle 13, notamment au calculateur 14, par l'intermédiaire d'une interface utilisateur 16 reliée au dispositif de contrôle 13 par une interface d'entrée 17. L'interface utilisateur 16 peut en outre être configurée pour afficher des informations d'état de l'aéronef 10 à l'attention d'un pilote ou d'un opérateur. Pour cela, l'interface utilisateur 16 est également reliée au dispositif de contrôle 13 par l'interface de sortie 15.

Afin de garantir une ré-accélération rapide en cas de panne de la turbomachine testée (c'est-à-dire la machine qui est amenée au régime de PMD), la puissance de l'autre turbomachine est ajustée suivant le besoin effectif de l'hélicoptère 10 tout en restant supérieure à une valeur minimale de puissance garantissant une telle ré-accélération. Le respect de cette puissance minimale par l'autre turbomachine peut alors empêcher la turbomachine testée d'atteindre la PMD : toutefois, la puissance atteinte par la turbomachine testée reste suffisamment proche de la PMD pour que le contrôle puisse être effectué de manière efficace.

Le dispositif de contrôle 13 peut en outre comprendre:
- une mémoire de données 18 dans laquelle sont par exemple préenregistrées une puissance seuil Pₛ prédéterminée, une température seuil Tₛ prédéterminée et une vitesse de rotation seuil NGₛ prédéterminée, lesquelles sont utilisées par le calculateur 14 comme cela sera développé dans la suite de la description,
- une mémoire de programme 19 dans laquelle est par exemple préenregistré le procédé 100, et
- au moins un bus de communication 20.

Comme indiqué plus haut, la puissance seuil (Ps) est une puissance minimale à atteindre par la turbomachine 11, 12 mise au régime de PMD en cas de panne de l'autre turbomachine. Elle peut par exemple être égale à la valeur minimale de puissance déclarée par le constructeur dans les tables de performances servant à l'équipage pour déterminer les masses embarquables.

La température seuil (Tₛ) est par exemple égale à la valeur minimale de température entre la turbine haute pression du générateur de gaz et la turbine basse pression déclarée par le constructeur dans les tables de performances servant à l'équipage pour déterminer les masses embarquables.

La vitesse de rotation seuil (NGₛ) est par exemple égale à la valeur minimale de vitesse de rotation nominale NG des pièces tournantes du générateur de gaz déclarée par le constructeur dans les tables de performances servant à l'équipage pour déterminer les masses embarquables.

Dans une forme de réalisation, pour traiter la puissance fournie P₁, P₂ par la turbomachine 11, 12 mise au régime de puissance PMD, le calculateur 14 est également configuré pour comparer la puissance fournie P₁, P₂ par la turbomachine 11, 12 mise au régime de puissance PMD à la puissance seuil Pₛ, de manière à s'assurer que la puissance fournie P₁, P₂ est supérieure ou égale à la puissance seuil Pₛ.

Plus précisément, si la puissance fournie P₁, P₂ par la turbomachine 11, 12 mise au régime de puissance PMD est supérieure ou égale à la puissance seuil Pₛ, le calculateur 14 est par exemple configuré pour commander à l'interface utilisateur 16 d'informer le pilote ou l'opérateur que la turbomachine 11, 12 mise au régime de puissance PMD peut fournir la puissance seuil Pₛ. La puissance seuil Pₛ correspond donc à une puissance minimale garantie en cas de panne de la turbomachine 12, 11 dont la puissance fournie P₂, P₁ est ajustée. Dans le cas contraire, c'est-à-dire si la puissance fournie P₁, P₂ est inférieure à la puissance seuil Pₛ, le calculateur 14 peut également être configuré pour commander à l'interface utilisateur 16 d'informer le pilote ou l'opérateur que la turbomachine 11, 12 mise au régime de puissance PMD ne peut pas fournir la puissance minimale garantie et qu'il existe un danger en cas de panne de la turbomachine 12, 11 dont la puissance fournie P₂, P₁ a été ajustée.

Pour que le calculateur 14 puisse déterminer la puissance fournie P₁, P₂ par les turbomachines 11, 12, chacune des turbomachines 11, 12 comprend par exemple un dispositif de mesure 21, 22 relié au dispositif de contrôle 13 par l'interface d'entrée 17 et comprenant :
- un premier capteur 23, 24 configuré pour mesurer un couple C₁, C₂ fourni par la turbomachine 11, 12, et
- un deuxième capteur 25, 26 configuré pour mesurer une vitesse de rotation NG₁, NG₂ de la turbomachine 11, 12.

La mesure des couples C₁ et C₂ peut par exemple être réalisée en sortie de chaque turbomachine 11, 12, c'est-à-dire au niveau de leur arbre intermédiaire d'entrée de la boîte de transmission.

Le calculateur 14 est alors configuré pour calculer la puissance fournie P₁, P₂ par la turbomachine 11, 12 mise au régime de puissance PMD à partir des mesures de couple C₁, C₂ et de vitesse de rotation NG₁, NG₂ effectuées par les premier et deuxième capteurs 23 à 26.

Dans un mode de réalisation, le calculateur 14 peut également être configuré pour comparer une température T₁, T₂ mesurée entre la turbine haute pression et la turbine basse pression de la turbomachine 11, 12 mise au régime de puissance PMD à la température seuil Tₛ, de manière à s'assurer que la température T₁, T₂ mesurée est inférieure à la température seuil Tₛ (étapes 108 à 110).

Plus précisément, si la température T₁, T₂ ainsi mesurée dans la turbomachine 11, 12 mise au régime de puissance PMD est inférieure à la température seuil Tₛ, le calculateur 14 est par exemple configuré pour commander à l'interface utilisateur 16 d'informer le pilote ou l'opérateur que la température T₁, T₂ ne dépasse pas la température seuil Tₛ, c'est-à-dire qu'il n'y a pas de surchauffe de la turbomachine 11, 12 mise au régime de puissance PMD, lorsque cette dernière est à la vitesse de rotation maximale correspondant au régime de puissance PMD (étape 109).

Dans le cas contraire, c'est-à-dire si la température T₁, T₂ mesurée de la turbomachine 11, 12 mise au régime de puissance PMD est supérieure ou égale à la température seuil Tₛ, le calculateur 14 peut également être configuré pour commander à l'interface utilisateur 16 d'informer le pilote ou l'opérateur que la turbomachine 11, 12 mise au régime de puissance PMD surchauffe à ce régime et qu'il existe un danger en cas de panne de la turbomachine 12, 11 dont la puissance fournie P₂, P₁ a été ajustée (étape 110).

Pour mesurer la température T₁, T₂ des turbomachines 11, 12, le dispositif de mesure 21, 22 de chacune des turbomachines 11, 12 comprend par exemple un troisième capteur 27, 28 configuré pour mesurer la température T₁, T₂ entre la turbine haute pression et la turbine basse pression de la turbomachine 11, 12.

Dans un mode de réalisation, le calculateur 14 peut également être configuré pour comparer une vitesse de rotation NG₁, NG₂ mesurée de la turbomachine 11, 12 mise au régime de puissance PMD à la vitesse de rotation seuil NGₛ, de manière à s'assurer que la vitesse de rotation NG₁, NG₂ mesurée est supérieure ou égale à la vitesse de rotation seuil NGₛ (étapes 111-114).

Plus précisément, si la vitesse de rotation NG₁, NG₂ de la turbomachine 11, 12 mise au régime de puissance PMD est supérieure ou égale à la vitesse de rotation seuil NGₛ, le calculateur 14 est par exemple configuré pour commander à l'interface utilisateur 16 d'informer le pilote ou l'opérateur que la turbomachine 11, 12 mise au régime de puissance PMD peut atteindre la vitesse de rotation seuil NGₛ, lorsque cette dernière est à la température maximale correspondant au régime de puissance PMD (étape 113).

Dans le cas contraire, c'est-à-dire si la vitesse de rotation NG₁, NG₂ de la turbomachine 11, 12 mise au régime de puissance PMD est inférieure à la vitesse de rotation seuil NGₛ, le calculateur 14 peut également être configuré pour commander à l'interface utilisateur 16 d'informer le pilote ou l'opérateur que la vitesse de rotation NG₁, NG₂ de la turbomachine 11, 12 mise au régime de puissance PMD est limitée par la température maximale correspondant au régime de puissance PMD et qu'il existe un danger en cas de panne de la turbomachine 12, 11 dont la puissance fournie P₂, P₁ a été ajustée (étape 114).

Pour mesurer la vitesse de rotation NG₁, NG₂ des turbomachines 11, 12, le dispositif de mesure 21, 22 de chacune des turbomachines 11, 12 comprend par exemple le deuxième capteur 25, 26 précédemment décrit.

Dans un mode de réalisation, le procédé 100 de vérification est automatiquement interrompu lorsque l'une au moins des trois conditions suivantes est remplie :
- la vitesse de rotation N1 de l'arbre haute pression est inférieure à une vitesse de rotation seuil N1ₛ
- la vitesse de rotation N2 de l'arbre basse pression est inférieure à une vitesse de rotation seuil N1ₛ₁ et supérieure à une vitesse de rotation seuil N1ₛ₁ et/ou
- une panne est détectée sur l'une des turbomachines 11, 12 (régime OEI).

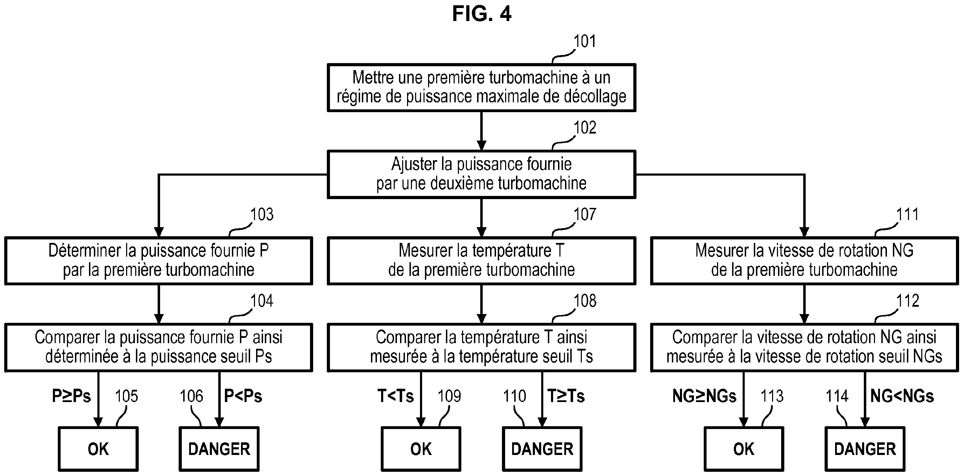

La figure 4 montre un procédé 100 de vérification de la puissance maximale disponible de l'une des turbomachines 11, 12 de l'hélicoptère 10.

Le procédé 100 est par exemple lancé par le pilote ou l'opérateur par l'intermédiaire de l'interface utilisateur 16.

De préférence, le procédé 100 est réalisé lors de chaque vol pour chacune des turbomachines 11, 12. En d'autres termes, on vérifie de préférence à chaque vol la puissance maximale que peut fournir chacune des turbomachines 11, 12.

Par ailleurs, le procédé 100 est de préférence réalisé pendant une phase de vol au cours de laquelle l'effet d'une panne de l'une ou l'autre des turbomachines 11, 12 serait minimal, par exemple au cours d'une phase de croisière, à proximité d'une surface de déroutement.

Le procédé 100 comprend les étapes suivantes :
- mettre l'une des turbomachines 11, 12 au régime de puissance PMD (101), et
- ajuster la puissance fournie P₂, P₁ par l'autre des turbomachines 12, 11 (102), de sorte que les turbomachines 11, 12 délivrent la puissance P₁₊₂ nécessaire à l'hélicoptère 10 pendant sa phase de vol.
- déterminer une puissance fournie P₁, P₂ par la turbomachine 11, 12 mise au régime de puissance maximale au décollage (PMD) (103), et
- traiter la puissance fournie P₁, P₂ ainsi déterminée pour en déduire une information relative à la puissance maximale disponible (104).

De préférence, l'étape 104 de traitement est réalisée par comparaison de la puissance fournie P₁, P₂ ainsi déterminée à la puissance seuil Pₛ, de manière à s'assurer que la puissance fournie P₁, P₂ est supérieure ou égale à la puissance seuil Pₛ.

Le cas échéant, la puissance de l'autre turbomachine 12, 11 est ajustée suivant le besoin effectif de l'hélicoptère tout en restant supérieure à une valeur minimale de puissance garantissant une telle ré-accélération.

Puis, si la puissance fournie P₁, P₂ par la turbomachine 11, 12 mise au régime de puissance PMD est supérieure ou égale à la puissance seuil Pₛ, le procédé 100 comprend par exemple une étape 105 au cours de laquelle le pilote ou l'opérateur est informé que la turbomachine 11, 12 mise au régime de puissance PMD peut fournir la puissance minimale garantie.

Dans le cas contraire, c'est-à-dire si la puissance fournie P₁, P₂ par la turbomachine 11, 12 mise au régime de puissance PMD est inférieure à la puissance seuil Pₛ, le procédé 100 comprend par exemple une étape 106 au cours de laquelle le pilote ou l'opérateur est informé que la turbomachine 11, 12 mise au régime de puissance PMD ne peut pas fournir la puissance minimale garantie et qu'il existe un danger en cas de panne de la turbomachine 12, 11 dont la puissance fournie P₂, P₁ a été ajustée.

La puissance fournie P₁, P₂ par la turbomachine 11, 12 mis au régime de puissance PMD est par exemple déterminée au cours des étapes suivantes consistant à :
- mesurer le couple C₁, C₂ fourni par la turbomachine 11, 12 ;
- mesurer la vitesse de rotation NG₁, NG₂ de la turbomachine 11, 12 et
- calculer la puissance fournie P₁, P₂ par la turbomachine 11, 12 mise au régime de puissance PMD à partir des mesures de couple C₁, C₂ et de vitesse de rotation NG₁, NG₂ précédemment réalisées.

Le procédé 100 peut également comprendre les étapes suivantes :
- mesurer la température T₁, T₂ entre la turbine haute pression et la turbine basse pression de la turbomachine 11, 12 mise au régime de puissance PMD (107), et
- comparer la température T₁, T₂ ainsi mesurée à la température seuil Tₛ, de manière à s'assurer que la température T₁, T₂ mesurée est inférieure à la température seuil Tₛ (108).

Puis, si la température T₁, T₂ par la turbomachine 11, 12 mise au régime de puissance PMD est inférieure à la température seuil Tₛ, le procédé 100 comprend par exemple une étape 109 au cours de laquelle le pilote ou l'opérateur est informé qu'il n'y a pas de surchauffe de la turbomachine 11, 12 mise au régime de puissance PMD, lorsque cette dernière est à la vitesse de rotation maximale correspondant au régime de puissance PMD.

Dans le cas contraire, c'est-à-dire si la température T₁, T₂ par la turbomachine 11, 12 mise au régime de puissance PMD est inférieure à la température seuil Tₛ, le procédé 100 comprend par exemple une étape 110 au cours de laquelle le pilote ou l'opérateur est informé que la turbomachine 11, 12 mise au régime de puissance PMD surchauffe à ce régime et qu'il existe un danger en cas de panne de la turbomachine 12, 11 dont la puissance fournie P₂, P₁ a été ajustée.

Le procédé 100 peut également comprend les étapes suivantes:
- mesurer 111 la vitesse de rotation NG₁, NG₂ de la turbomachine 11, 12 mise au régime de puissance PMD, et
- comparer 112 la vitesse de rotation NG₁, NG₂ ainsi mesurée à la vitesse de rotation seuil NGₛ, de manière à s'assurer que la vitesse de rotation NG₁, NG₂ mesurée est supérieure ou égale à la vitesse de rotation seuil NGₛ.

Puis, si la vitesse de rotation NG₁, NG₂ de la turbomachine 11, 12 mise au régime de puissance PMD est supérieure ou égale à la vitesse de rotation seuil NGₛ, le procédé 100 comprend par exemple une étape 113 au cours de laquelle le pilote ou l'opérateur est informé que la turbomachine 11, 12 mise au régime de puissance PMD peut atteindre la vitesse de rotation seuil NGₛ, lorsque cette dernière est à la température maximale correspondant au régime de puissance PMD.

Dans le cas contraire, c'est-à-dire si la vitesse de rotation NG₁, NG₂ est inférieure à la vitesse de rotation seuil NGₛ, le procédé 100 comprend par exemple une étape 114 au cours de laquelle le pilote ou l'opérateur est informé que la vitesse de rotation NG₁, NG₂ de la turbomachine 11, 12 mise au régime de puissance PMD est limitée par la température maximale correspondant au régime de puissance PMD et qu'il existe un danger en cas de panne de la turbomachine 12, 11 dont la puissance fournie P₂, P₁ a été ajustée.

L'hélicoptère 10 et le procédé 100 décrits ci-dessus permettent de s'assurer que chacune des turbomachines 11, 12 peut délivrer la puissance maximale à chaque régime, notamment aux régimes correspondant à des puissances particulièrement élevées comme au décollage (puissance PMD) ou au régime OEI.

En particulier, le fait d'utiliser le régime de puissance PMD pour vérifier la puissance maximale disponible de chaque turbomachine 11, 12 est particulièrement avantageux dans la mesure où à ce régime le niveau de puissance fourni par la turbomachine 11, 12 ne risque pas de l'endommager.

Le fait d'utiliser le régime de puissance PMD pour vérifier la puissance maximale disponible de chaque turbomachine 11, 12 présente en outre les avantages de :
- précipiter des pannes dormantes ou latentes des turbomachines 11, 12 ou du circuit carburant moteur (encrassement, érosion, corrosion, fluage, touches, vibrations, fissuration, colmatages, fuites, etc.),
- réduire la durée d'exposition aux pannes dormantes, notamment lorsque le procédé 100 est réalisé à chaque vol pour chacune des turbomachines 11, 12,
- provoquer une éventuelle défaillance de la turbomachine 11, 12 mise au régime de puissance PMD dans des conditions de vol, notamment en phase de croisière, dans des conditions où les conséquences d'une telle défaillance sont minimisées. En effet, en cas de défaillance de l'une des turbomachines 11, 12, l'autre des turbomachines 12, 11 sera moins sollicitée en phase de croisière que dans une autre phase de vol, ce qui limite les risques d'effets en cascade, c'est-à-dire la perte de l'une des turbomachines 11, 12, puis de l'autre des turbomachines 12, 11,

- éviter les opérations de maintenance et donc les interventions humaines sur les turbomachines 11, 12 qui peuvent elles-mêmes générer de nouveaux risques,
- pouvoir être complété par un contrôle EPC connu,
- permettre l'application du procédé de vérification 100 sur tout type de vol, et en particulier un vol commercial, l'hélicoptère 10 n'étant pas en vol monomoteur,
- garantir une durée de redémarrage suffisamment courte pour la turbomachine qui n'est pas testée quelles que soient les conditions de vol, afin d'assurer un atterrissage aisé de l'hélicoptère en régime OEI.

Les données de la turbomachine 11, 12 récoltées au cours du procédé 100 peuvent en outre être stockées dans la mémoire de données 18 en vue d'être analysées au sol de manière à déterminer si la turbomachine 11, 12 peut continuer ou non à être utilisée. Les résultats de ces analyses permettent par exemple de mieux garantir la disponibilité de puissance maximale de la turbomachine 11, 12 à chaque régime pour les prochains vols.

Enfin, le procédé 100 présente également l'avantage de pouvoir être réalisé sur n'importe quel type de vol (commercial ou technique) et de ne pas perturber ce dernier que ce soit en termes de vitesses, d'altitude, etc.

## Revendications

1. Procédé (100) de vérification de la puissance maximale disponible d'une turbomachine (11, 12) d'un aéronef (10) équipé de deux turbomachines (11, 12) configurées pour fonctionner en parallèle et fournir ensemble une puissance nécessaire (P₁₊₂) à l'aéronef pendant une phase de vol, ledit procédé étant **caractérisé en ce qu'**il comprend les étapes suivantes :
- mettre (101) une première des turbomachines (11, 12) à un régime sensiblement égale à un régime de puissance maximale au décollage (PMD), et
- ajuster (102) une puissance fournie (P₂, P₁) par une deuxième des turbomachines (12, 11), de sorte que les turbomachines (11, 12) continuent à fournir la puissance nécessaire (P₁₊₂) à l'aéronef pendant la phase de vol,
- déterminer (103) une puissance fournie (P₁, P₂) par la turbomachine (11, 12) mise au régime de puissance maximale au décollage (PMD), et
- traiter (104) la puissance fournie (P₁, P₂) ainsi déterminée pour en déduire une information relative à la puissance maximale disponible.

2. Procédé (100) selon la revendication 1, comprenant les étapes supplémentaire suivantes :
- déterminer une puissance seuil (Pₛ), ladite puissance seuil correspondant à une puissance minimale à atteindre par la turbomachine (11, 12) mise au régime de puissance maximale au décollage (PMD) en cas de panne de l'autre turbomachine (12, 11),
- comparer (104) la puissance fournie (P₁, P₂) ainsi déterminée à la puissance seuil (Pₛ).

3. Procédé (100) selon l'une des revendications 1 ou 2, dans lequel la turbomachine (11, 12) mise au régime de puissance maximale au décollage (PMD) comprend une turbine haute pression et une turbine basse pression, le procédé (100) comprenant les étapes suivantes :
- mesurer (107) une température des gaz entre la turbine haute pression et la turbine basse pression (T₁, T₂) de la turbomachine (11, 12) mise au régime de puissance maximale au décollage (PMD), et
- comparer (108) la température (T₁, T₂) ainsi mesurée à une température seuil (Tₛ) prédéterminée, de manière à s'assurer que la température (T₁, T₂) mesurée est inférieure à la température seuil (Tₛ).

4. Procédé (100) selon l'une des revendications 1 à 3, comprenant les étapes suivantes :
- mesurer (111) une vitesse de rotation (NG₁, NG₂) de la turbomachine (11, 12) mise au régime de puissance maximale au décollage (PMD), et
- comparer (112) la vitesse de rotation (NG₁, NG₂) ainsi mesurée à une vitesse de rotation seuil (NGₛ) prédéterminé, de manière à s'assurer que la vitesse de rotation (NG₁, NG₂) mesurée est supérieure ou égale à la vitesse de rotation seuil (NGₛ).

5. Procédé (100) selon l'une des revendications 1 à 4, comprenant en outre les étapes suivantes :
- déterminer une puissance de fonctionnement, ladite puissance de fonctionnement correspondant à une puissance minimale garantissant une ré-accélération de la deuxième des turbomachines (12, 11) en cas de panne de la turbomachine (11, 12) mise au régime de puissance maximale au décollage (PMD), et
- ajuster la puissance de la turbomachines (11, 12) mise au régime de puissance maximale au décollage (PMD) de sorte que la puissance fournie par la deuxième des turbomachines (12, 11) reste supérieure à la puissance de fonctionnement ainsi déterminée.

6. Procédé (100) selon l'une des revendications 1 à 5, dans lequel la turbomachine (11, 12) mise au régime de puissance maximale au décollage (PMD) comprend un arbre haute pression et un arbre basse pression, et dans lequel le procédé (100) est automatiquement interrompu lorsque l'une au moins des conditions suivantes est remplie :
- la vitesse de rotation de l'arbre haute pression est inférieure à une première vitesse de rotation seuil,
- la vitesse de rotation de l'arbre basse pression est inférieure à une deuxième vitesse de rotation seuil et supérieure à une troisième vitesse de rotation seuil
- une panne est détectée sur l'une des turbomachines (11, 12).

7. Produit programme d'ordinateur comprenant des instructions de code pour l'exécution d'un procédé (100) de vérification de la puissance maximale disponible d'une turbomachine (11, 12) d'un aéronef (10) selon l'une quelconque des revendications 1 à 6 lorsque ce programme est exécuté par un processeur.

8. Dispositif de contrôle (13) comprenant un calculateur (14), **caractérisé en ce que** le calculateur est configuré pour mettre en œuvre un procédé (100) de vérification de la puissance maximale disponible d'une turbomachine (11, 12) d'un aéronef (10) équipé de deux turbomachines (11, 12) destinées à fonctionner en parallèle et à fournir ensemble une puissance nécessaire (P₁₊₂) à l'aéronef (10) pendant une phase de vol selon l'une quelconque des revendications 1 à 6, ledit calculateur (14) étant configuré pour mettre en œuvre les étapes suivantes :
- mettre (101) une première turbomachine (11, 12) à un régime sensiblement égale à un régime de puissance maximale au décollage (PMD),
- ajuster (102) une puissance fournie (P₂, P₁) par une deuxième turbomachine (12, 11), de sorte que les turbomachines (11, 12) continuent à fournir une puissance nécessaire (P₁₊₂) à l'aéronef (10) pendant une phase de vol.
- déterminer (103) une puissance fournie (P₁, P₂) par la turbomachine (11, 12) mise au régime de puissance maximale au décollage (PMD), et
- traiter (104) la puissance fournie (P₁, P₂) ainsi déterminée pour en déduire une information relative à la puissance maximale disponible.

9. Ensemble comprenant deux turbomachines (11, 12) configurées pour fonctionner en parallèle et fournir ensemble une puissance nécessaire (P₁₊₂) à un aéronef (10) pendant une phase de vol, ledit ensemble étant **caractérisé en ce qu'**il comprend un dispositif de contrôle (13) selon la revendication 8.

10. Aéronef (10) comprenant deux turbomachines (11, 12) configurées pour fonctionner en parallèle et fournir ensemble une puissance nécessaire (P₁₊₂) à l'aéronef (10) pendant une phase de vol, ledit aéronef étant **caractérisé en ce qu'**il comprend un calculateur (14) configuré pour mettre en œuvre le procédé de vérification de la puissance maximale disponible d'une turbomachine d'aéronef selon l'une quelconque des revendications 1 à 6.

## Patentansprüche

1. Verfahren (100) zur Überprüfung der verfügbaren Höchstleistung eines Turbinentriebwerks (11, 12) eines Luftfahrzeugs (10), das mit zwei Turbinentriebwerken (11, 12) ausgerüstet ist, die ausgestaltet sind, um parallel in Betrieb zu sein und zusammen eine für das Luftfahrzeug während einer Flugphase erforderliche Leistung (P₁₊₂) bereitzustellen, wobei das Verfahren **dadurch gekennzeichnet ist, dass** es die folgenden Schritte umfasst:
- Versetzen (101) eines ersten von den Turbinentriebwerken (11, 12) in einen Betrieb, der im Wesentlichen gleich einem Betrieb mit höchster Startleistung (PMD) ist, und
- Anpassen (102) einer von einem zweiten von den Turbinentriebwerken (12, 11) bereitgestellten Leistung (P₂, P₁), derart dass die Turbinentriebwerke (11, 12) weiterhin die für das Luftfahrzeug während der Flugphase erforderliche Leistung (P₁₊₂) bereitstellen,
- Bestimmen (103) einer von dem in den Betrieb mit höchster Startleistung (PMD) versetzten Turbinentriebwerk (11, 12) bereitgestellten Leistung (P₁, P₂), und
- Verarbeiten (104) der so bestimmten bereitgestellten Leistung (P₁, P₂), um eine Information davon abzuleiten, die die verfügbare Höchstleistung betrifft.

2. Verfahren (100) nach Anspruch 1, das die folgenden zusätzlichen Schritte umfasst:
- Bestimmen einer Schwellenleistung (Pₛ), wobei die Schwellenleistung einer durch das in den Betrieb mit höchster Startleistung (PMD) versetzte Turbinentriebwerk (11, 12) im Fall eines Ausfalls des anderen Turbinentriebwerks (12, 11) zu erreichenden Mindestleistung entspricht,
- Vergleichen (104) der so bestimmten bereitgestellten Leistung (P₁, P₂) mit der Schwellenleistung (Pₛ).

3. Verfahren (100) nach einem der Ansprüche 1 oder 2, wobei das in den Betrieb mit höchster Startleistung (PMD) versetzte Turbinentriebwerk (11, 12) eine Hochdruckturbine und eine Niederdruckturbine umfasst, wobei das Verfahren (100) die folgenden Schritte umfasst:
- Messen (107) einer Temperatur der Gase zwischen der Hochdruckturbine und der Niederdruckturbine (T₁, T₂) des in den Betrieb mit höchster Startleistung (PMD) versetzten Turbinentriebwerks (11, 12), und
- Vergleichen (108) der so gemessenen Temperatur (T₁, T₂) mit einer vorbestimmten Schwellentemperatur (Tₛ), derart, dass sichergestellt wird, dass die gemessene Temperatur (T₁, T₂) niedriger ist als die Schwellentemperatur (Tₛ).

4. Verfahren (100) nach einem der Ansprüche 1 bis 3, das die folgenden Schritte umfasst:
- Messen (111) einer Drehzahl (NG₁, NG₂) des in den Betrieb mit höchster Startleistung (PMD) versetzten Turbinentriebwerks (11, 12), und
- Vergleichen (112) der so gemessenen Drehzahl (NG₁, NG₂) mit einer vorbestimmten Schwellendrehzahl (NGₛ), derart, dass sichergestellt wird, dass die gemessene Drehzahl (NG₁, NG₂) höher oder gleich der Schwellendrehzahl (NGₛ) ist.

5. Verfahren (100) nach einem der Ansprüche 1 bis 4, das ferner die folgenden Schritte umfasst:
- Bestimmen einer Betriebsleistung, wobei die Betriebsleistung einer Mindestleistung entspricht, die eine erneute Beschleunigung des zweiten von den Turbinentriebwerken (12, 11) im Fall eines Ausfalls des in den Betrieb mit höchster Startleistung (PMD) versetzten Turbinentriebwerks (11, 12) sicherstellt, und
- Anpassen der Leistung des in den Betrieb mit höchster Startleistung (PMD) versetzten Turbinentriebwerks (11, 12), derart, dass die durch das zweite von den Turbinentriebwerken (12, 11) bereitgestellte Leistung höher als die so bestimmte Betriebsleistung bleibt.

6. Verfahren (100) nach einem der Ansprüche 1 bis 5, wobei das in den Betrieb mit höchster Startleistung (PMD) versetzte Turbinentriebwerk (11, 12) eine Hochdruckwelle und eine Niederdruckwelle umfasst, und wobei das Verfahren (100) automatisch unterbrochen wird, wenn mindestens eine von den folgenden Bedingungen erfüllt ist:
- die Drehzahl der Hochdruckwelle ist niedriger als eine erste Schwellendrehzahl,
- die Drehzahl der Niederdruckwelle ist niedriger als eine zweite Schwellendrehzahl und höher als eine dritte Schwellendrehzahl
- an einem der Turbinentriebwerke (11, 12) wird ein Ausfall festgestellt.

7. Computerprogrammprodukt, das Codeanweisungen zur Ausführung eines Verfahrens (100) zur Überprüfung der verfügbaren Höchstleistung eines Turbinentriebwerks (11, 12) eines Luftfahrzeugs (10) nach einem der Ansprüche 1 bis 6 umfasst, wenn dieses Programm von einem Prozessor ausgeführt wird.

8. Steuervorrichtung (13), die einen Rechner (14) umfasst, **dadurch gekennzeichnet, dass** der Rechner ausgestaltet ist, um ein Verfahren (100) nach einem der Ansprüche 1 bis 6 zur Überprüfung der verfügbaren Höchstleistung eines Turbinentriebwerks (11, 12) eines Luftfahrzeugs (10) durchzuführen, das mit zwei Turbinentriebwerken (11, 12) ausgerüstet ist, die dazu bestimmt sind, parallel in Betrieb zu sein und zusammen eine für das Luftfahrzeug (10) während einer Flugphase erforderliche Leistung (P₁₊₂) bereitzustellen, wobei der Rechner (14) ausgestaltet ist, um die folgenden Schritte durchzuführen:
- Versetzen (101) eines ersten Turbinentriebwerkes (11, 12) in einen Betrieb, der im Wesentlichen gleich einem Betrieb mit höchster Startleistung (PMD) ist, und
- Anpassen (102) einer von einem zweiten Turbinentriebwerk (12, 11) bereitgestellten Leistung (P₂, P₁), derart dass die Turbinentriebwerke (11, 12) weiterhin eine für das Luftfahrzeug (10) während einer Flugphase erforderliche Leistung (P₁₊₂) bereitstellen,
- Bestimmen (103) einer von dem in den Betrieb mit höchster Startleistung (PMD) versetzten Turbinentriebwerk (11, 12) bereitgestellten Leistung (P₁, P₂), und
- Verarbeiten (104) der so bestimmten bereitgestellten Leistung (P₁, P₂), um eine Information davon abzuleiten, die die verfügbare Höchstleistung betrifft.

9. Baugruppe, die zwei Turbinentriebwerke (11, 12) umfasst, die ausgestaltet sind, um parallel in Betrieb zu sein und zusammen eine für ein Luftfahrzeug (10) während einer Flugphase erforderliche Leistung (P₁₊₂) bereitzustellen, wobei die Baugruppe **dadurch gekennzeichnet ist, dass** sie eine Steuervorrichtung (13) nach Anspruch 8 umfasst.

10. Luftfahrzeug (10), das zwei Turbinentriebwerke (11, 12) umfasst, die ausgestaltet sind, um parallel in Betrieb zu sein und zusammen eine für das Luftfahrzeug (10) während einer Flugphase erforderliche Leistung (P₁₊₂) bereitzustellen, wobei das Luftfahrzeug **dadurch gekennzeichnet ist, dass** es einen Rechner (14) umfasst, der ausgestaltet ist, um das Verfahren zur Überprüfung der verfügbaren Höchstleistung eines Turbinentriebwerks eines Luftfahrzeugs nach einem der Ansprüche 1 bis 6 durchzuführen.

## Claims

1. A method (100) of checking the maximum available power of a turbine engine (11, 12) of an aircraft (10) equipped with two turbine engines (11, 12) configured to operate in parallel and together to supply the aircraft with the necessary power (P₁₊₂) during a flight phase, said method being **characterised in that** it comprises the following steps:
- placing (101) a first of the turbine engines (11, 12) in an engine speed substantially equal to an engine speed at maximum take-off power (PMD), and
- adjusting (102) a power supplied (P₂, P₁) by a second of the turbine engines (12, 11), so that the turbine engines (11, 12) keep supplying the aircraft with the necessary power (P₁₊₂) during the flight phase,
- determining (103) a power supplied (P₁, P₂) by the turbine engine (11, 12) placed in engine speed at maximum take-off power (PMD), and
- processing (104) the thus determined supplied power (P₁, P₂) in order to deduce an information related to the maximum available power.

2. The method (100) according to claim 1, comprising the following additional steps:
- determining a threshold power (Pₛ), said threshold power corresponding to a minimum power to be reached by the turbine engine (11, 12) placed in engine speed at maximum take-off power (PMD) in an event of failure of the other turbine engine (12, 11),
- comparing (104) the thus determined supplied power (P₁, P₂) with the threshold power (Pₛ).

3. The method (100) according to any of claims 1 or 2, wherein the turbine engine (11, 12) placed in the engine speed at maximum take-off power (PMD) comprises a high pressure turbine and a low pressure turbine, the method (100) comprising the following steps:
- measuring (107) a temperature of the gases between the high pressure turbine and the low pressure turbine (T₁, T₂) of the turbine engine (11, 12) placed in engine speed at maximum take-off power (PMD), and
- comparing (108) the measured temperature (T₁, T₂) with a predetermined threshold temperature (Tₛ), so as to ensure that the measured temperature (T₁, T₂) is lower than the threshold temperature (Tₛ).

4. The method (100) according to any of claims 1 to 3, comprising the following steps:
- measuring (111) a rotation speed (NG₁, NG₂) of the turbine engine (11, 12) placed in the engine speed at maximum take-off power (PMD), and
- comparing (112) the measured rotation speed (NG₁, NG₂) with a predetermined threshold rotation speed (NGₛ) so as to ensure that the measured rotation speed (NG₁, NG₂) is higher than or equal to the threshold rotation speed (NGₛ).

5. The method (100) according to any of claims 1 to 4, further comprising the following steps:
- determining an operating power, said operating power corresponding to a minimum power guaranteeing a re-acceleration of the second of the turbine engines (12, 11) in an event of failure of the turbine engine (11, 12) placed in engine speed at maximum take-off power (PMD), and
- adjusting the power of the turbine engines (11, 12) placed in engine speed at maximum take-off power (PMD) such that the power supplied by the second of the turbine engines (12, 11) remains higher than the determined operating power.

6. The method (100) according to any of claims 1 to 5, wherein the turbine engine (11, 12) placed in engine speed at maximum take-off power (PMD) comprises a high pressure shaft and a low pressure shaft, and wherein the method (100) is automatically interrupted when at least one of the following conditions is fulfilled:
- rotation speed of the high pressure shaft is lower than a first threshold rotation speed,
- rotation speed of the low pressure shaft is lower than a second threshold rotation speed and higher than a third threshold rotation speed
- a failure is detected in one of the turbine engines (11, 12).

7. A computer program product comprising code instructions for executing a method (100) of checking the maximum available power of a turbine engine (11, 12) of an aircraft (10) according to any one of claims 1 to 6 when this program is executed by a processor.

8. A controlling device (13) comprising a computer (14) **characterised in that** the computer is configured to implement a method (100) of checking the maximum available power of a turbine engine (11, 12) of an aircraft (10) equipped with two turbine engines (11, 12) intended to operate in parallel and to supply together the necessary power (P₁₊₂) to the aircraft (10) during a flight phase according to any one of claims 1 to 6, said computer (14) being configured to implement the following steps:
- placing (101) a first turbine engine (11, 12) in an engine speed substantially equal to an engine speed at maximum take-off power (PMD),
- adjusting (102) a power supplied (P₂, P₁) by a second turbine engine (12, 11), such that the turbine engines (11, 12) continue supplying the aircraft (10) with the necessary power (P₁₊₂) during a flight phase,
- determining (103) a power supplied (P₁, P₂) by the turbine engine (11, 12) placed in the engine speed at maximum take-off power (PMD), and
- processing (104) the thus determined power supplied (P₁, P₂) to deduce an information related to the maximum available power.

9. An assembly comprising two turbine engines (11, 12) configured to operate in parallel and together to supply the necessary power (P₁₊₂) for an aircraft (10) during a flight phase, said assembly being **characterised in that** it comprises a controlling device (13) according to claim 8.

10. An aircraft (10) comprising two turbine engines (11, 12) configured to operate in parallel and together to supply the necessary power (P₁₊₂) for the aircraft (10) during a flight phase, said aircraft being **characterised in that** it comprises a computer (14) configured to implement the method for checking the maximum available power of an aircraft turbine engine according to any one of claims 1 to 6.
